# EUROPEAN PATENT APPLICATION

(11) **EP 4 621 676 A1**
(43) Date of publication of application: **24.09.2025**
(21) Application number: 25156774.9
(22) Date of filing: 10.02.2025
(51) Int. Cl.: G06Q 10/0631, G06F 11/07, G06N 20/10, G06Q 10/0633, G06Q 10/0635, G06Q 30/016, H04L 69/40

(54) **AUTOMATIC RMA FOR HARDWARE FAILURES OR PREDICTED FAILURES**

(30) Priority: 22.03.2024 US 202418613600
(71) Applicant: Arista Networks, Inc., Santa Clara, CA 95054 (US)
(72) Inventor: SIGOURE, Benoit, Santa Clara, CA, 95054 (US); HANCIUTA, Vlad Serban, Santa Clara, CA, 95054 (US)
(74) Representative: Hoffmann Eitle

(57) **Abstract**

A return merchandise authorization (RMA) monitor may monitor an operating status of a device continuously, periodically, or on demand. The RMA monitor may receive signals from the device, the signals containing telemetry data about the device. The RMA monitor may determine whether the signals include a fault signal containing an error code which indicates that a hardware failure of the device or a component thereof has occurred. Alternatively or additionally, the RMA may determine a health status of the device based on the telemetry data about the device and predict whether the device and/or which component thereof faces an imminent failure. Responsive to the hardware failure or the imminent failure of the device or the component thereof, the RMA monitor can automatically initiate an RMA process to send an RMA code or number to an owner of the device, for instance, through a communication channel indicated by the owner.

## Description

### TECHNICAL FIELD

This disclosure relates generally to detecting and reporting hardware failures in electronic devices. More particularly, this disclosure relates to automatic return merchandise authorization for hardware failures or predicted failures in electronic devices such as network devices.

### BACKGROUND OF THE RELATED ART

Today, electronic devices such as network devices (e.g., switches, routers, access points, firewalls, gateways, networking appliances, etc.) may be shipped from manufacturers with a built-in mechanism for detecting and/or reporting hardware failures. Depending on the severity of a hardware failure, an operator of a network device may receive a warning and/or a notification that something is wrong with the network device (e.g., a component or part is faulty or has failed). Then, the operator needs to manually collect relevant information (e.g., hardware operation metrics from a system log, etc.), contact technical support provided by the manufacturer of the network device, open a ticket to obtain an authorization to return the faulty part or the network device to the manufacturer.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIG. 1 depicts a diagrammatical representation of a system for return merchandise authorization according to some embodiments disclosed herein.
FIG. 2 is a flowchart that illustrates an example of a method for return merchandise authorization according to some embodiments disclosed herein.

### DETAILED DESCRIPTION

Specific embodiments will now be described with reference to the accompanying figures (FIGS). The figures and the following description describe certain embodiments by way of illustration only. One skilled in the art will readily recognize from the following description that alternative embodiments of the structures and methods illustrated herein may be employed without departing from the principles described herein. It is noted that wherever practicable similar or like reference numbers may be used in the figures and may indicate similar or like functionality.

Currently, many electronic devices have mechanisms in place to detect and report hardware failures. However, in general, consumers still have to manually collect relevant information (e.g., logs, metrics, etc.) and contact technical support that, in turn, opens a ticket to address the faulty part or device, for instance, by giving a return merchandise authorization (RMA) number.

A goal of this disclosure is to solve this problem by automatically programmatically reacting to a failure detection event or predicting an imminent failure (e.g., an imminent failure of a device or a component thereof) and, in response, initiating an RMA process such as opening an RMA ticket with the relevant information included. In embodiments disclosed herein, this goal is realized in an RMA monitor. In some embodiments, the RMA monitor may run on a server machine to remotely monitor and/or receive signals from devices by various manufacturers. In some embodiments, the RMA monitor may operate in a cloud computing environment or on the premises of an enterprise.

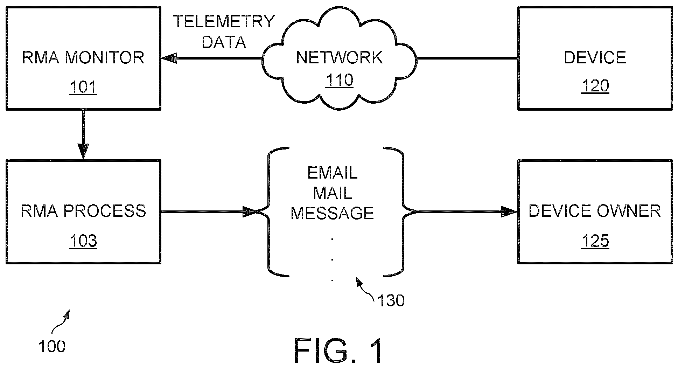

FIG. 1 depicts a diagrammatical representation of an RMA system 100 according to some embodiments disclosed herein. The RMA system 100 may include an RMA monitor 101. The RMA monitor 101 is configured for monitoring an operating status of a device 120 over a network 110 and receiving signals from the device 120. The signals may contain telemetry data about the device 120. The RMA monitor 101 is capable of initiating an RMA process 103, described below, for sending an RMA code or number to a device owner 125 through an appropriate communication channel 130.

Those skilled in the art will appreciate that the device 120 is made of a variety of components. Non-limiting examples can include, but are not limited to, a field-replaceable unit (FRU), a customer-replaceable unit (CRU), a line card, a fabric card, a supervisor module, an optical transceiver, a fan, a flash drive, , a storage system, a power supply, etc. FRUs, CRUs, line cards, fabric cards, supervisor modules, and optical transceivers are known to those in the field of computer networking and thus are not further described herein.

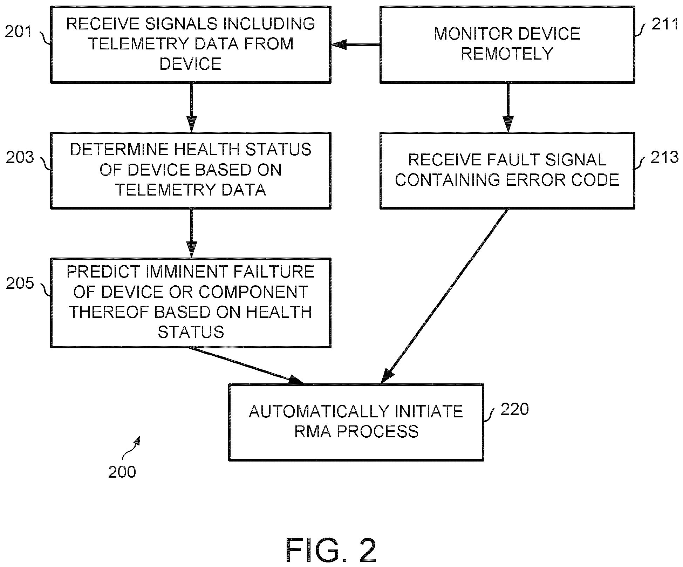

FIG. 2 is a flowchart that illustrates an example of an RMA method 200 according to some embodiments disclosed herein. As an example, the RMA monitor 101 shown in FIG. 1 may be configured for receiving signals from the device 120 (201), the signals comprising telemetry data about the device. The RMA monitor 101 may run on a server machine remote from the device 120. The RMA monitor 101 may determine, based on the telemetry data about the device 120, a health status of the device 120 (203). Then, based on the health status of the device 120 thus determined, the RMA monitor 101 may generate a prediction on whether the device 120 or a component thereof faces an imminent failure (205). If so, the RMA monitor 101 may automatically initiate the RMA process 103 to send an RMA code or number to the device owner 125 (220).

In some embodiments, the RMA monitor 101 may monitor an operating status of the device 120 continuously, periodically, or on demand (211). The RMA monitor 101 may determine whether the signals include a fault signal containing an error code which indicates that a hardware failure of the device 120 or the component thereof has occurred (213). If so, the RMA monitor 101 may automatically initiate the RMA process 103 to send an RMA code or number to the device owner 125 (220).

In some embodiments, the RMA monitor may determine that an RMA is necessary in either of the following scenarios:
1. The RMA monitor receives a fault signal from a device indicating that a hardware component or part (e.g., an FRU, a line card, a fabric card, a supervisor module, a fan, a flash drive, an optical transceiver, a storage system, a power supply, etc.) has failed (i.e., a confirmed hardware failure). For instance, the electronic device sends an error code to the RMA monitor, indicating that a fan or power supply unit is plugged in, but is not working.
2. The RMA monitor receives telemetry data from the device and determines, based on an analysis of the telemetry data, that the device or a hardware component or part likely has failed or will fail imminently (i.e., a predicted hardware failure).

In some embodiments, the RMA monitor is configured for responding to either scenario by automatically initiating an RMA process. For instance, to address the confirmed hardware failure, the RMA monitor may automatically initiate an RMA process based on a rule which defines a condition and an action (e.g., condition = fault signal is true and action = generate an RMA code).

In some embodiments, the RMA monitor is trained (e.g., through unsupervised and/or supervised machine learning using historical RMA data as training/test data) to predict the failure of a device or a component thereof with a certain probability. The RMA monitor thus trained is operable to leverage telemetry data for remotely monitoring electronic devices. Machine learning based telemetry analytic techniques (e.g., parametric models such as Lasso regression and Kernel Ridge Regression, non-parametric models such as K-Nearest Neighbors and Decision Tree Regression, artificial neural network, etc.) are known to those skilled in the art and thus are not further described herein. Other types of telemetry analytic tools, such as statistical methods, pattern recognition, and so on, may also be utilized.

The term "telemetry" refers to a mechanisms that uses sensors, telemeters, and the like to automatically collect and transmit data from remote sources, such as hardware components of the remotely monitored electronic devices, to a central location. These sensors, telemeters, and the like are usually strategically placed on the hardware components to capture real-time sensor information. In some embodiments, these electronic devices and/or hardware components may each have the ability to report an operating status, a device-level failure, and/or a component-level failure to the RMA monitor.

As a non-limiting example, a flash drive may send warning signs to the RMA monitor (directly or through the device). Since a flash drive can only be written so many times, writing actively likely will cause failure.

Through telemetry, such warning signs and/or events of interest (e.g., an observation by or a state of a device-level program, firmware, or operating system, a number of operating hours, a usage cycle of a component, a strength of a transceiver signal, a power consumption level of a component, a performance level of a component, an occurrence of a correctable hardware error, an occurrence of an uncorrectable hardware error, a voltage level of a component, or a number of writes of a component, etc.), collectively referred to herein as telemetry data, are collected from the device and transmitted to the RMA monitor.

The RMA monitor is configured to conduct an analysis on the collected telemetry data and determine a health status of a device or a component thereof. For example, by analyzing telemetry data associated with a particular hardware component, the RMA monitor can, based on a power consumption change or a performance degradation over time found in the telemetry data, predict that there is an imminent failure of the particular hardware component. An imminent failure at the device level can be predicted or otherwise determined in a similar manner. For instance, an analysis of the telemetry data over a period of time may indicate an imminent failure of a device when an overall power consumption by the device has deviated significantly from a normal operating status of the device, that an overall performance by the device has degraded to an unacceptable level, that a number or percentage of components of the device faces actual and/or predicted failures, etc. When the probability of a predicted hardware failure of a device or a component thereof meets a predefined threshold (e.g., 90%, 95%, etc.), the RMA monitor can proactively initiate an automatic RAM process, even though, technically, the device or the component thereof has not actually failed.

The RMA monitor may leverage various mechanisms for determining the operating status and/or health status of an electronic device. U.S. Patent Application Publication No. US 2021/0384969 A1, entitled "LASER DIODE HEALTH MONITOR," which is incorporated by reference herein, provides an example for obtaining laser measurements for a laser operating in an optical transceiver in a network device, obtaining a failure profile for the laser, making a first determination that the laser measurements match the failure profile, and based on the first determination, initiating a remediation action for the optical transceiver. In some embodiments, the RMA monitor can augment the remediation action by initiating an RMA process.

In this way, the RMA monitor can collect, on a continuing or periodic basis or responsive to an on-demand instruction, telemetry data of hardware components from remotely monitored electronic devices, detect imminent failures (e.g., via corresponding error codes raised by a hardware component), and report each actual or imminent failure with a remediation, for instance, repairing the faulty hardware device/component or sending a replacement device/part.

The determination that an RMA is needed could be either fully automated based on the telemetry the RMA monitor has received, or partially automated (e.g., a semi-automated RMA process) wherein a ticket is filed first, so that a review of the problem is done before actually triggering the RMA, in case if some human judgment is deemed necessary for cases where automatic determination is considered not reliable enough. The review could be internal only (e.g., by a technical support team members looking at the telemetry and logs from the device and concluding that an RMA is indeed warranted) or it could involve the customer (e.g., to ask them to reseat, clean, or moving a piece of hardware before concluding that it is indeed faulty).

Once it is determined that an RMA is needed, the RMA monitor may trigger an RMA process automatically, without the customer (i.e., the owner of the device at issue) having to ask for an RMA. This RMA process is initiated by the RMA monitor based on observations as discussed above. This process can be automated fully, wherein the RMA monitor already knows the ship-to address for the device at issue and just sends a notification to the owner of the device at issue. The notification can be sent through any appropriate communication channels including, but are not limited to, email, mail, text messaging, etc. The notification may inform the device owner, for instance: "Dear Customer, we detected a failure of Part A (or we think Part A is likely to fail soon) and we've created an RMA number #1234 and shipped a replacement of Part A to your address that we have on file: at 123 Main St. Here is the tracking number for the shipment."

The RMA monitor may obtain the ship-to address for the device from a database storing device owner information or the RMA monitor may ask the device owner (e.g., by email or through some other communication channel such as a user interface) for a ship-to address. The database may be managed centrally through a cloud-based device provisioning or device management platform operating in a computing environment where the RMA monitor resides. The device owner may register the device with the cloud-based device provisioning platform or the device management platform and stores a configuration file of the device, including the ship-to address. This way, customers can manage this RMA process just like any other aspect of the configuration of their devices and the process is fully automated.

The combination of the steps described above can significantly streamline the RMA process. From the customer's point of view, significantly less effort would be required to replace faulty hardware. Ideally, no effort should be involved on the part of the customer beyond just actually swapping the faulty device or hardware component and returning it back to its manufacturer. The end-to-end time between hardware failing and the RMA process being fully activated should be significantly reduced. Customers generally pay different amounts based on how quickly they want replacement parts (e.g., next business day vs 4-hr.). Therefore, some customers may pay a premium to get replacement parts quickly (e.g., 4-hr. or less delivery). Since the clock starts ticking from the point the RMA process is initiated, there is a continuing need and desire to significantly reduce the time spent upfront to get to the point where the RMA is initiated. This disclosure can address this need and desire by shortening the traditional RMA turnaround time.

As shown above, specific embodiments have been described with reference to the accompanying figures. In the above description, numerous details are set forth as examples. It will be understood by those skilled in the art, and having the benefit of this Detailed Description, that one or more embodiments described herein may be practiced without these specific details and that numerous variations or modifications may be possible without departing from the scope of the embodiments. Certain details known to those of ordinary skill in the art may be omitted to avoid obscuring the description.

In the above description of the figures, any component described with regard to a figure, in various embodiments, may be equivalent to one or more like-named components shown and/or described with regard to any other figure. For brevity, descriptions of these components may not be repeated with regard to each figure. Thus, each and every embodiment of the components of each figure is incorporated by reference and assumed to be optionally present within every other figure having one or more like-named components. Additionally, in accordance with various embodiments described herein, any description of the components of a figure is to be interpreted as an optional embodiment, which may be implemented in addition to, in conjunction with, or in place of the embodiments described with regard to a corresponding like-named component in any other figure.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

As used herein, the phrase operatively connected, or operative connection, means that there exists between elements/components/devices a direct or indirect connection that allows the elements to interact with one another in some way. For example, the phrase 'operatively connected' may refer to any direct (e.g., wired directly between two devices or components) or indirect (e.g., wired and/or wireless connections between any number of devices or components connecting the operatively connected devices) connection. Thus, any path through which information may travel may be considered an operative connection.

While embodiments described herein have been described with respect to a limited number of embodiments, those skilled in the art, having the benefit of this Detailed Description, will appreciate that other embodiments can be devised which do not depart from the scope of embodiments as disclosed herein. Accordingly, the scope of embodiments described herein should be limited only by the attached claims.

## Claims

1. A system for return merchandise authorization (RMA), the system comprising:
a processor;
a non-transitory computer-readable medium; and
instructions stored on the non-transitory computer-readable medium and translatable by the processor for implementing an RMA monitor, the instructions when translated by the processor perform:
receiving signals from a device, the signals comprising telemetry data about the device;
determining, based on the telemetry data about the device, a health status of the device;
predicting, based on the health status of the device thus determined, whether the device or a component thereof faces an imminent failure; and
automatically initiating an RMA process to send an RMA code or number to an owner of the device.

2. The system of claim 1, wherein the instructions when translated by the processor further perform:
monitoring an operating status of the device continuously, periodically, or on demand, wherein the RMA process is automatically initiated responsive to the imminent failure of the component of the device.

3. The system of claim 1 or claim 2, wherein the instructions when translated by the processor further perform:
determining whether the signals include a fault signal containing an error code which indicates that a hardware failure of the device or the component thereof has occurred, wherein the RMA process is automatically initiated responsive to the hardware failure of the device or the component thereof.

4. The system of any preceding claim, wherein the telemetry data comprises at least one of:
an observation by or a state of a device-level program, firmware, or operating system,
a number of operating hours,
a usage cycle of the component,
a strength of a transceiver signal,
a power consumption level of the component,
a performance level of the component,
a correctable error of the component,
an uncorrectable error of the component,
a voltage level of the component, or
a number of writes of the component.

5. The system of any preceding claim, wherein the component comprises a field-replaceable unit, a line card, a fabric card, a supervisor module, a fan, a flash drive, an optical transceiver, a storage system, or a power supply.

6. The system of any preceding claim, wherein the device comprises a switch, a router, a network appliance, an access point, a firewall device, or a gateway device.

7. The system of any preceding claim, wherein the RMA process comprises sending the RMA code or number to the owner of the device through an email, mail, or messaging service.

8. A computer-readable medium storing instructions translatable by a processor for implementing a return merchandise authorization (RMA) monitor, the instructions when translated by the processor perform:
receiving signals from a device, the signals comprising telemetry data about the device;
determining, based on the telemetry data about the device, a health status of the device;
predicting, based on the health status of the device thus determined, whether the device or a component thereof faces an imminent failure; and
automatically initiating an RMA process to send an RMA code or number to an owner of the device.

9. The computer-readable medium of claim 8, wherein the instructions when translated by the processor further perform:
monitoring an operating status of the device continuously, periodically, or on demand, wherein the RMA process is automatically initiated responsive to the imminent failure of the component of the device.

10. The computer-readable medium of claim 8 or claim 9, wherein the instructions when translated by the processor further perform:
determining whether the signals include a fault signal containing an error code which indicates that a hardware failure of the device or the component thereof has occurred, wherein the RMA process is automatically initiated responsive to the hardware failure of the device or the component thereof.

11. The computer-readable medium of any of claims 8 to 10, wherein the telemetry data comprises at least one of:
an observation by or a state of a device-level program, firmware, or operating system,
a number of operating hours,
a usage cycle of the component,
a strength of a transceiver signal,
a power consumption level of the component,
a performance level of the component,
a correctable error of the component,
an uncorrectable error of the component,
a voltage level of the component, or a number of writes of the component; and
wherein the component comprises a field-replaceable unit, a line card, a fabric card, a supervisor module, a fan, a flash drive, an optical transceiver, a storage system, or a power supply.

12. The computer-readable medium of any of claims 8 to 11, wherein the device comprises a switch, a router, a network appliance, an access point, a firewall device, or a gateway device.

13. The computer-readable medium of any of claims 8 to 12, wherein the RMA process comprises sending the RMA code or number to the owner of the device through an email, mail, or messaging service.

14. A method for return merchandise authorization (RMA), the method comprising:
monitoring, by an RMA monitor executing on a server machine remote from a device, an operating status of the device continuously, periodically, or on demand, the monitoring comprising:
receiving signals from the device, the signals comprising telemetry data about the device;
determining, based on the telemetry data about the device, a health status of the device; and
predicting, based on the health status of the device thus determined, whether the device or a component thereof faces an imminent failure; and
responsive to the imminent failure, automatically initiating, by the RMA monitor, an RMA process to send an RMA code or number to an owner of the device.

15. The method according to claim 14, further comprising:
determining whether the signals include a fault signal containing an error code which indicates that a hardware failure of the device or the component thereof has occurred, wherein the RMA process is automatically initiated responsive to the hardware failure of the device or the component thereof, wherein the device comprises a switch, a router, a network appliance, an access point, a firewall device, or a gateway device, wherein the component comprises a field-replaceable unit, a line card, a fabric card, a supervisor module, a fan, a flash drive, an optical transceiver, a storage system, or a power supply, and wherein the RMA process comprises sending the RMA code or number to the owner of the device through an email, mail, or messaging service.
